## Europäisches Patentamt

## European Patent Office

## Office européen des brevets

(19)

(11) Veröffentlichungsnummer: **0 103 262**
**B1**

(12) **EUROPÄISCHE PATENTSCHRIFT**

(45) Veröffentlichungstag der Patentschrift:
**07.01.88**

(51) Int. Cl.⁴: **B 23 B 31/00**, B 23 Q 3/12

(21) Anmeldenummer: **83108787.9**

(22) Anmeldetag: **06.09.83**

(54) **Drehmaschinenspindel mit fliehkraftausgleichendem Spannfutter.**

(30) Priorität: **13.09.82 DE 3233914**

(43) Veröffentlichungstag der Anmeldung:
**21.03.84 Patentblatt 84/12**

(45) Bekanntmachung des Hinweises auf die Patenterteilung:
**07.01.88 Patentblatt 88/1**

(84) Benannte Vertragsstaaten:
**CH DE FR GB LI SE**

(56) Entgegenhaltungen:
**DE - C - 388 960**
**DE - C - 724 892**
**GB - A - 2 025 808**

(73) Patentinhaber: **Oerlikon-Boehringer GmbH, Stuttgarter Strasse 50 Postfach 220, D-7320 Göppingen (DE)**

(72) Erfinder: **Felten, Werner, Dr.-Ing., Holbeinstrasse 12, D-7320 Göppingen (DE)**
Erfinder: **Honroth, Walter, Hölderlinweg 11, D-7320 Göppingen (DE)**
Erfinder: **Kuhn, Siegfried, Kornbergstrasse 28/1, D-7321 Dürnau (DE)**
Erfinder: **Schulten, Hermann, Brückenstrasse 46, D-7321 Birnbach (DE)**
Erfinder: **Zeller, Bruno, Stockwiesenstrasse 22, D-7321 Lauterstein (DE)**

(74) Vertreter: **Vogeser, Werner, Dipl.-Ing. et al, Patentanwälte Hansmann & Vogeser Albert-Rosshaupter-Strasse 65, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Drehmaschinenspindel entsprechend dem Oberbegriff des Anspruchs 1.

Es ist bekannt, dass es der Übergang zu höheren Drehzahlen bei Drehmaschinen erforderlich machte, einen Fliehkraftausgleich zu schaffen, um eine radiale Auswärtsbewegung der Spannbacken und damit ein Lösen eines Werkstückes zu verhindern. Hierzu sind, wie etwa im DE-GM 76 13 635.1 beschrieben, am Flansch der Drehspindel einer Drehmaschine lösbar befestigbare Spannfutter bekannt, die in ihrem Futterboden radiale Nuten aufweisen, in denen Gleitstücke verschiebbar gelagert sind. Diese wirken über Umlenkhebel auf die Grundbacken der Spannbacken als Fliehkraftausgleichsgewichte und drücken die Grundbacken aufgrund ihrer eigenen, radial nach aussen gerichteten Bewegung nach innen.

Bei Drehmaschinen besteht das grundsätzliche Problem des Überhanges des Spannfutters in bezug auf hinter dem Spindelflansch befindlichen Lager. Je grösser der Überhang ist, desto mehr wird das Rattern der Spindel begünstigt und die Bearbeitungsgenauigkeit verringert. Da die zuvor erwähnten Aufspannfutter mit Fliehkraftausgleich wegen der Gleitstücke und der Umlenkhebel eine relativ grosse axiale Länge haben, ergeben sich ungünstige Bedingungen hinsichtlich des Überhanges des Aufspannfutters.

Der Erfindung liegt die Aufgabe zugrunde, die Drehmaschinenspindel der eingangs genannten Art so auszubilden, dass der Überhang des Aufspannfutters möglichst gering ist.

Gelöst wird diese Aufgabe gemäss der Erfindung durch die im kennzeichnenden Teil des Anspruchs 1 angegebenen Merkmale.

Zweckmässige Ausgestaltungen der Erfindung ergeben sich aus den Unteransprüchen.

Durch die einstückige Ausbildung des Spindelflansches und des Futterbodens wird das Aufspannfutter bzw. zumindest ein Teil des Aufspannfutters in die Drehspindel integriert, so dass der Überhang des Aufspannfutters um die axiale Länge des Futterbodens verringert werden kann.

Dadurch, dass der Futterkörper durch Verbindungselemente wie Bolzen an dem am Spindelflansch integrierten Futterboden befestigbar ist, wird eine kompakte Einheit gebildet, so dass keine Trennfuge zwischen Spindelflansch und Futterboden entsteht und sich in diesem Bereich eine hohe Steifigkeit ergibt.

Ein weiterer Vorteil der geringeren Länge liegt darin, dass es nun möglich ist, die Fuge zwischen Spindelflansch und Futterkörper einschliesslich der radialen Nuten für die Fliehkraftgewichte komplett mittels eines Ringes, der am Maschinengehäuse befestigt ist, abzudecken und damit gegen Kühlmittel und Späne zu schützen. Da die Aussendurchmesser von Drehmaschinenfuttern genormt sind, genügt ein einziger, universeller Abdeckring, der aufgrund der einfach zu handhabenden O-Ring-Dichtung zum Futterkörper auch beim Futterwechsel nicht entfernt werden muss.

Eine solche Abdeckung war beim Stand der Technik aus zwei Gründen nicht möglich: Erstens wären aufgrund der grösseren axialen Länge der Einheit und damit des Abdeckringes die Fliehkräfte am freien Ende des Abdeckringes zu gross geworden, um ein Aufplatzen des Ringes und damit eine Gefährdung der Bedienungsperson auszuschliessen und zweitens waren wegen des zusätzlichen Futterbodens die Umlenkhebel entsprechend länger als beim Erfindungsgegenstand, was zwangsweise zu grösserem Verschieben wegen der Fliehkraftgewichte führte und damit eine Abdeckung unmittelbar ausserhalb des Futterkörpers unmöglich machte.

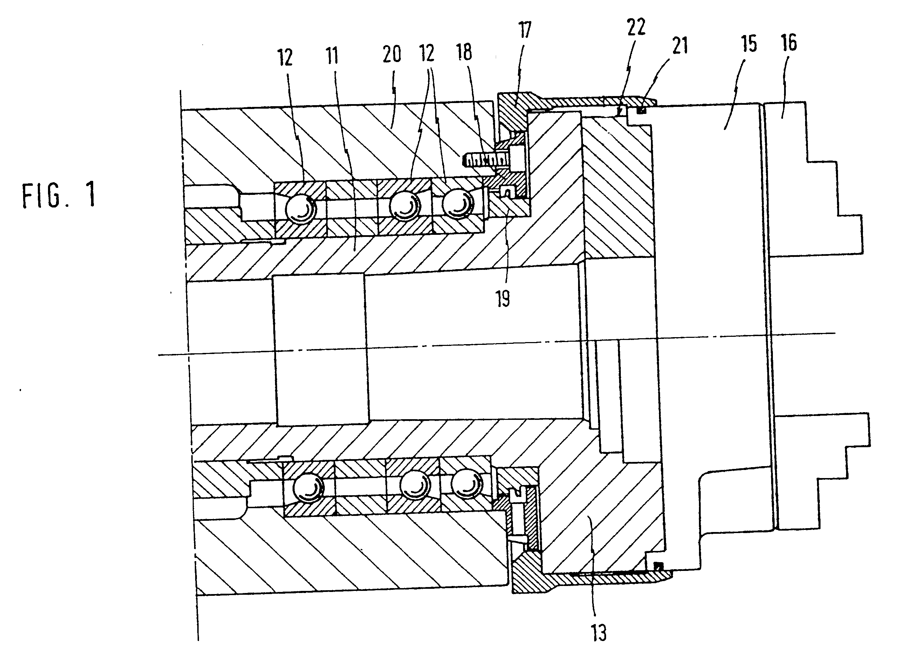

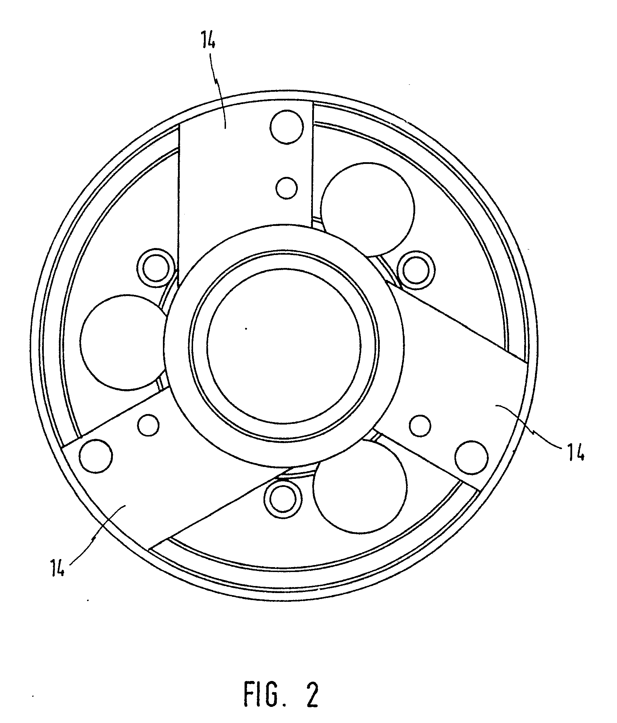

Die Erfindung wird nachstehend anhand der Fig. 1 und 2 beispielsweise erläutert. Es zeigt:

Fig. 1 einen Axialschnitt der Drehmaschinenspindel im Spindelflanschbereich und

Fig. 2 eine Aufsicht auf den Spindelflansch.

Die Drehspindel 11 einer nicht näher gezeigten Drehmaschine ist durch Lager 12 im Maschinengehäuse 20 gelagert und weist einen Flansch 13 zur lösbaren Befestigung eines Aufspannfutters mit Fliehkraftausgleich auf. Der Boden des Futters ist zusammen mit dem Spindelflansch 13 einstückig ausgebildet. In diesem Spindelflansch 13 sind auf der dem Futterkörper 15 zugewandten Seite radiale Nuten 14 (Fig. 2) ausgebildet, in denen die Gleitstücke 22 verschiebbar geführt sind, die über nicht gezeigte Umlenkhebel und Grundbacken im Futterkörper 15 auf die Aufspannbacken 16 wirken.

Zwischen dem dem Spindelflansch 13 nächstgelegenen Lager 12 und dem Flansch 13 befindet sich eine Labyrinth-Dichtung 18, 19, die am Maschinengehäuse 20 befestigt ist.

Ebenfalls im Zwischenraum zwischen dem Gehäuse 20 und dem Flansch 13 ist ein Ring 17 befestigt, der über den Flansch 13 bis zum Futterkörper 15 reicht, an dessen Umfang der Ring 17 mittels eines O-Dichtringes anliegt.

In dem Futterkörper 15 befinden sich diejenigen Teile, die zur Verstellung der Spannbacken 16 mittels eines in die Spindelbohrung eingesetzten Zugrohres erforderlich sind.

## Patentansprüche

1. Drehmaschinenspindel mit einem fliehkraftausgleichenden Spannfutter, wobei Fliehkraftgewichte (22) in radialen Nuten (14) verschiebbar gelagert sind, die zum Fliehkraftausgleich über schwenkbare Umlenkhebel auf die Grundbacken der Spannbacken (16) wirken, dadurch gekennzeichnet, dass die Nuten (14) im Spindelflansch (13) angeordnet sind und der Futterkörper (15) direkt am Spindelflansch (13) lösbar befestigt ist.

2. Drehmaschinenspindel nach Anspruch 1, gekennzeichnet durch einen am Umfang des Spindelflänsches (13) sitzenden, über die Trennfuge zwischen Spindelflansch (13) und Futterkörper (15) hinausreichenden Abdeckring (17), der mittels eines O-Dichtungsrings (21) am Umfang des Futterkörpers (15) anliegt.

## Claims

1. Lathe spindle with a centrifugal force balancing chuck, in which centrifugal weights (22) movably mounted in radial grooves (14) operate to balance centrifugal force through pivotable arms on the base cheeks of the chuck jaws (16), characterised in that the grooves (14) are arranged in the spindle flange (13) and the chuck body (15) is releasably secured directly on the spindle flange (13).

2. Lathe spindle according to claim 1, characterised by a cover ring (17) seated on the periphery of the spindle flange (13) and extending beyond the separable joint between the spindle flange (13) and the chuck body (15), the cover ring fitting closely around the periphery of the chuck body (15) by means of an O-ring seal (21).

## Revendications

1. Broche de tour avec un mandrin compensé pour des forces centrifuges, comportant des masselottes centrifuges (22) coulissant dans des gorges radiales (14) et agissant, par l'intermédiaire de culbuteurs pivotants, et de façon à compenser les forces centrifuges, sur les mors de base des mors de serrage (16), caractérisée par le fait que les gorges (14) sont disposées dand le nez (13) de la broche, et le corps (15) du mandrin est fixé, de façon amovible, directement sur le nez (13) de la broche.

2. Broche de tour selon la revendication 1, caractérisée par un anneau (17) de protection disposé à la périphérie du nez (13) de la broche et s'étendant au-delà du plan de séparation entre le nez (13) de la broche et le corps (15) du mandrin, et étant appliqué sur la périphérie du corps (15) du mandrin par l'intermédiaire d'un joint torique (21).

FIG. 1

FIG. 2